(19) Europäisches Patentamt

European Patent Office

Office européen des brevets

(11) **EP 1 578 024 A1**

(12) **EUROPEAN PATENT APPLICATION**

(43) Date of publication:
21.09.2005 Bulletin 2005/38

(51) Int Cl.⁷: **H04B 1/707**

(21) Application number: **04425175.9**

(22) Date of filing: **16.03.2004**

| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL LT LV MK** | (71) Applicant: **Siemens Mobile Communications S.p.A.**<br>**20126 Milano (IT)**<br><br>(72) Inventor: **Montanari, Ettore**<br>**43036 Fidenza (IT)** |
|---|---|

(54) **Joint detection method using MMSE-LE for CDMA-based mobile communication systems**

(57)      A method of joint detection in CDMA-based mobile communication systems uses a FFT (Fast Fourier Transform) technique in combination with a minimum mean square error linear equalisation (MMSE-LE) technique. The channel response matrix $A$, or each of its portions resulting from a sliding window decomposition, is made block-circulant and is then row added to a square diagonal matrix representative of the effects of the MMSE variance. The modified matrix resulting from said addition is submitted to at least one orthonormal transformation setting to zero the variance terms and making again block-circulant the remaining part of the matrix.

RECEIVE ON DIFFERENT ANTENNAS A COMBINED SIGNAL/VECTOR $e$ RELATED TO A TIME SLOT AND CONTAINING SPREAD USER SYMBOLS AFFECTED BY CHANNEL INTERFERENCE AND NOISE. — 101

ESTIMATE CHANNEL IMPULSE RESPONSE FOR EACH USER AND EACH ANTENNA. — 102

CONSTRUCT CHANNEL RESPONSE MATRIX $A$ BASED ON ESTIMATED CHANNELS AND USER SPREADING CODES. — 103

EXTRACT WINDOWED CHANNEL RESPONSE SUBMATRICES $A_s$ USED TO PERFORM SLIDING WINDOW DETECTION. — 104

ADD SOME BLOCK COLUMNS TO EACH $A_s$ TO OBTAIN A BLOCK CIRCULANT MATRIX $A_{sc}$. — 105

DIVIDE VECTOR $e$ INTO SUBVECTORS $e_{sc}$. — 106

BUILD MATRICES $A_{sc}{}^e$ BY BLOCK ADDING A SQUARE DIAGONAL MATRIX REPRESENTING EFFECT OF MMSE VARIANCE TERM $\sigma^2$ TO BOTTOM PART OF EACH $A_{sc}$. — 107

BUILD VECTORS $e_{sc}{}^e$ BY ZERO PADDING VECTORS $e_{sc}$. — 108

APPLY ORTHONORMAL TRANSFORMATIONS ON EACH MATRIX $A_{sc}{}^e$ TO OBTAIN MATRIX $A_{sc}{}^{cm}$ WITH CIRCULANT MATRIX $A_{sc}{}^c$ IN UPPER PART AND ZEROS IN LOWER PART. — 109

APPLY SAME TRANSFORMATIONS TO VECTORS $e_{sc}{}^e$ TO OBTAIN VECTORS $e_{sc}{}^{cm}$ WITH UPPER PART $e_{sc}{}^c$ — 110

SOLVE WITH FOURIER METHOD SMALL MINIMUM SQUARE ERROR PROBLEMS $A_{sc}{}^c \cdot d_{sc}{}^e = e_{sc}{}^c$. — 111

EXTRACT CENTRAL PART OF SOLUTIONS $d_{sc}{}^e$ TO OBTAIN THE DIFFERENT PARTS OF MMSE ESTIMATION OF TRANSMITTED SYMBOLS. — 112

FIG. 11

Printed by Jouve, 75001 PARIS (FR)

**Description**

Field of the invention

The present invention refers to mobile communication systems using Code Division Multiple Access (CDMA), and more particularly it concerns a method of joint (or multiuser) detection in one such system by means of the MMSE-LE (Minimum Mean Square Error - Linear Equalisation) technique. The invention also concerns a detector implementing the method and a communication system including the detector.

Background of the Invention

As known, CDMA is a multiplexing technique by which several users can simultaneously access a transmission channel by modulating pre-assigned complex signatures, known as spreading codes, by their respective data. In case of a CDMA-based mobile communication system, such as a third generation mobile communication systems, several users (co-channel users) can thus share a same frequency and a same time slot. In uplink direction, at each time slot, the bursts of co-channel users simultaneously arrive at a receiver, and the problem arises of detecting, the signals of said users.

A technique commonly used for such detection is the joint detection technique, in which the signals from all co-channel users are simultaneously detected. Taking into account that antenna diversity is generally used at the receiver, this means that, at each time slot, the receiver has to process a sequence *e* resulting from the superposition of the sequences of spread symbols arriving at all antenna elements from all co-channel users.

In a mathematical representation, *e* is a vector given by

$$e=Ad+n \tag{1}$$

where *d* is the vector of the transmitted symbols of all co-channel users, *A* is the matrix of the impulse responses of the channel for all co-channel users and all antennas, and *n* is a noise vector. Neglecting for sake of simplicity the noise effects (that can be eliminated through a whitening filter acting on both the data and the channel responses), joint detection corresponds to finding vector *d* that minimises quantity

$$|A{\cdot}d{-}e| \tag{2}$$

where '‖' denotes the usual complex vector norm operation.

Vector *d* can be determined by using the so called Zero Forcing Linear Equalisation (ZFLE) method, which is represented by either of the following equations:

$$\begin{cases} \boldsymbol{d} = (\boldsymbol{A}^H \cdot \boldsymbol{A})^{-1} \cdot \boldsymbol{A}^H \cdot \boldsymbol{e} \\ \boldsymbol{d} = \boldsymbol{T} \cdot \boldsymbol{Q}^H \cdot \boldsymbol{e} \end{cases} \tag{3}$$

In the equations above:

- $\boldsymbol{A}^H$ is the conjugate-transpose (Hermitian) of matrix *A*
- *Q* and *T* are the matrix factors related to the so-called *QR* decomposition of matrix *A*, where:

- *Q* is a square orthonormal matrix ($\boldsymbol{Q} \cdot \boldsymbol{Q}^H = \boldsymbol{Q}^H \cdot \boldsymbol{Q}$ = Identity matrix)
- *T* is a rectangular matrix in which the non-zero elements triangular part is the inverse of the *QR* decomposition triangular part of *R* and is placed in the left side of the matrix.

Another possible and better solution of the Minimum Square Error Problem, used in Joint detection, uses the MMSE-LE technique, and is given by:

$$d=(A^H{\cdot}A+\sigma^2 I)^{-1}{\cdot}A^H{\cdot}e \tag{4}$$

where $I$ is the identity matrix and $\sigma^2$ is the inverse of the noise variance related to the transmitted symbols $d$ that are considered cross-uncorrelated.

A more complete discussion of the theoretical principles of the above solutions can be found in "Zero Forcing and Minimum Mean-Square-Error Equalization for Multiuser Detection in Code-Division Multiple-Access Channels", by A. Klein, G.K.Kaleh, P.W.Baier, IEEE Transactions On Vehicular Technology, Vol. 45, No. 2, pp. 276-287, May 1996.

A known technique for implementing the above-mentioned equalisation methods is based on the Fast Fourier Transform (FFT), which exploits the fact that signal processing in the frequency domain is often simpler than in the time domain.

In a class of detectors applying the FFT to the implementation of the ZFLE, the computational complexity is reduced by splitting the general minimum square error problem of equation (2) into several smaller minimum square error problems, by decomposing matrix $A$ and vectors $e$ and d in several overlapping submatrices and subvectors (sliding window method).

The sliding window FFT technique is applicable both to time division duplexing (TDD) and frequency division duplexing (FDD) CDMA mobile systems, as disclosed in "Comparative Study of Joint-Detection Techniques for TD-CDMA Based Mobile Radio Systems", by M.Vollmer, M Haardt, J.Götze, IEEE Journal on Selected Areas in Communications, Vol. 19, No. 8, pp. 1461-1475, August 2001; "FFT Speed Multiuser Detection for High Rate Data Mode in UTRA-FDD", by R.Machauer, M.Iorescu and F.Jondral, IEEE 54th Vehicular Technology Conference, Fall 2001, pp. 502-505, October 2001; and "FFT-Speed and Windowed Multiuser Detector for UTRA-FDD High Rate Data Mode", by R.Machauer and F.Jondral, IEEE 7th International Symposium on Spread-Spectrum Tech. & Appl. Prague, Sept. 2-5, 2002.

WO-A 02/063779, WO-A 02/082268 and WO-A 02/089346 disclose CDMA receivers using the FFT for implementing either the ZFLE or the MMSE-LE in TD-CDMA systems. In such prior art documents, the FFT technique is applied to the channel correlation matrix ($A^HA$ in the ZFLE or $A^HA+\sigma^2I$ in the MMSE-LE), without using the sliding window method. Operating on the complete matrix entails a greater computational burden than operating on a plurality of smaller matrices. A further addition to the computational complexity is given by the choice of operating on the channel cross-correlation matrix, which is to be computed from the channel response matrix obtained by the channel estimation, and by the consequent need to compute the output of a matched filter.

WO-A 02/063779 admits the possibility of operating also on the channel response matrix, but such a solution is not considered because, according to the document, it would entail a truncation of the last W-1 (W = channel length) rows of the matrix.

The aim of the invention is to provide a joint detection method based on the MMSE estimation implemented through the FFT technique, which method obviates the drawbacks of the prior art.

## Summary of the Invention

According to the invention, this is obtained by a method in which the transmitted symbol vector is detected from the channel response matrix and the received signal vector through a MMSE-LE technique using Fourier transform, wherein said MMSE-LE technique is implemented directly on the channel response matrix or on each of a plurality of portions thereof, made block-circulant by the addition of at least one block column and then row added to a square diagonal matrix representative of the effect of a MMSE variance, thereby forming a modified matrix with an upper part including channel response terms and a lower part including minimum mean square error variance terms; and wherein at least one orthonormal transformation is applied to:

- the or each modified matrix, in order to obtain a transformed matrix in which the MMSE variance terms are set to zero and all blocks in the upper part are transformed so that they have all a same structure and form again a block-circulant matrix, and
- the received signal vector or each of a plurality of portions thereof, zero padded to make the vector length correspond with the modified matrix length.

The invention provides also a detector for a base station of a CDMA mobile communication system, and a CDMA mobile communication system including base stations equipped with said detector.

Preferably, the invention is applied to a TD-SCDMA system.

## Brief description of the drawings

A preferred embodiment of the invention, given by way of non-limiting example, will now be disclosed with reference to the accompanying drawings, in which:

- Fig. 1 is a schematic block diagram of the uplink channel of a CDMA mobile communication system;
- Fig. 2 is a representation of the organisation of a burst in the system of Fig. 1;
- Fig. 3 to 6 are graphical representations explaining some phases of the sliding window method;
- Fig. 7 is a graphical representation of the submatrix shown in Fig. 6 after the addition of the minimum mean square error variance terms;
- Fig. 8 is a graphical representation of the set of subvectors of the received signal vector adapted for use with submatrices like that shown in Fig. 7;
- Figs. 9 and 10 are graphical representations of some steps of application of the FFT and IFFT to a matrix and a received signal vector processed according to the invention;
- Fig. 11 is a flow chart of the method of the invention;
- Fig. 12 is a flow chart of the transformations according to the invention;
- Fig. 13 is a graphical representation of a block of a matrix like that shown in Fig. 7 after application of the transformations of Fig. 12;
- Figs. 14 to 16 are graphical representations of transformations leading to the block of Fig. 13, in a general case;
- Figs. 17 is a graphical representation of the transformations applied to a block of the matrix shown in Fig. 7;
- Fig. 18 is a graphical representation of the application of the transformations of Fig. 17 to the vectors shown in Fig. 8; and
- Fig. 19 is a graph comparing the performance of the invention and of a conventional FFT sliding window method.

Description of the preferred embodiment

For sake of clarity, but without any limiting sense, the following description will mainly refer to a TD-SCDMA (TD-Synchronous CDMA) system.

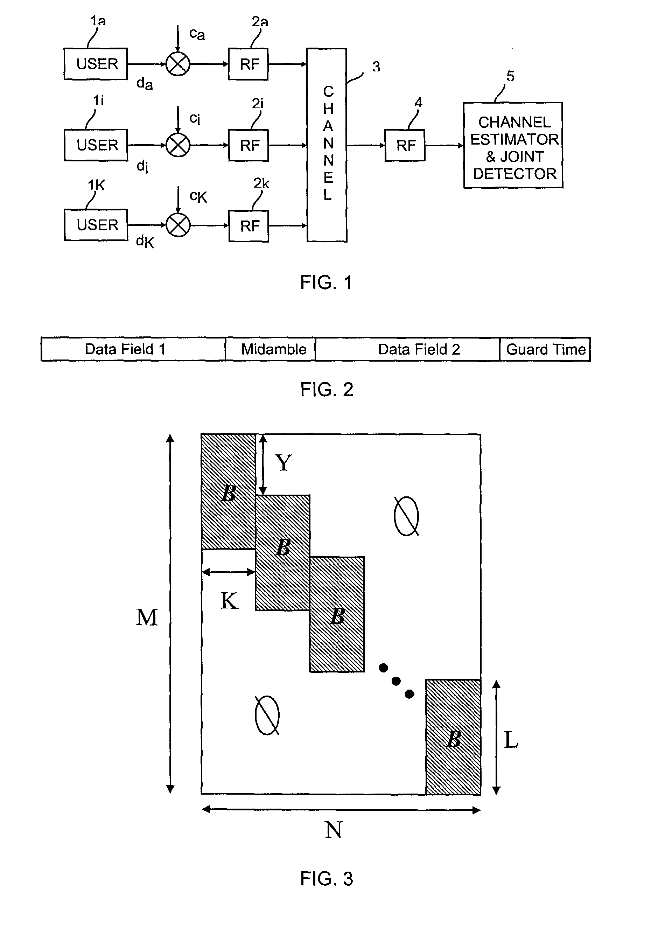

Fig. 1 schematically shows a group of co-channel users 1a...1i...1K of a TD-SCDMA system, which share a same time slot and a same frequency in the uplink transmission direction. The users generate respective symbol sequences $d_a...d_K$. The symbols in each sequence $d_a...d_K$ are individually spread by a respective code $c_a...c_K$ comprising a predetermined number C (spreading factor) of complex elements (chips). For simplicity, it is assumed that each user is assigned a single code, even if, as known, a user can be assigned several codes if his/her communication requires so. The spread sequences are modulated to radio-frequency in modulating and transmitting blocks 2a...2K and sent over the wireless transmission channel 3 to the base station, schematised here by receiving and demodulating unit 4 and by channel estimation and joint detection unit 5.

As known, and as shown in Fig. 2, the spread sequence of each user is transmitted as a burst comprising two data fields (or half bursts), each comprising D symbols, separated by the midamble, which contains the training codes used for channel estimation. A guard time separates consecutive bursts.

Receiver 4 receives a combined sequence resulting from the superposition of the bursts from users 1a...1K, affected by interference and noise, and converts such sequence to base-band signals. Since receiver 4 generally includes a plurality of receiving antennas, the sequence will comprise as many replicas of each burst as the antennas are. After sampling at the proper rate in a sampling unit (not shown), block 5 determines the matrix of the channel response for the different bursts by using the midambles and performs the joint detection for the left and right half bursts according to a FFT-based sliding window method used in connection with a MMSE-LE technique.

The basic principles of the sliding window method will be shortly recalled with reference to Figs. 3 to 6.

Fig. 3 is a graphical representation of channel response matrix **A**. Considering half a burst and denoting by W is the length of the channel impulse response and by Z the number of antennas in receiver 4, in case of maximum resource usage in the time slot, **A** is a matrix with M rows and N columns, where M = (D*C+W-1)*Z and N = D*K, and comprises D blocks of size L*K, where L = (C+W-1)*Z, arranged along the matrix diagonal and vertically shifted by Y = C*Z rows relative to the previous block. Vector **e** is a column vector with size M, whose elements are the chips of the different spread symbols of the different users received at the different antennas in that burst. Vector d is a column vector with size N, whose elements are the chips of the different spread symbols transmitted by the users in that half burst.

In the exemplary application to a TD-SCDMA system with K = 16 and Z = 8, assuming a spreading factor C = 16 for all codes and taking into account that W = 16, it can be immediately seen that M = 2936, N = 352, L = 248 and Y = 128.

The sliding window method decomposes the minimum square problem of equation (2) into a plurality of problems $\|A_s \cdot d_s - e_s\|$ or, written in another form,

$$A_s \cdot d_s = e_s \qquad (5)$$

where $A_s$ are submatrices of size $M_s$ taken from matrix $A$, and $d_s$, $e_s$ are subvectors of length $M_s$, $N_s$ respectively, taken from vectors $d$ and $e$, respectively.

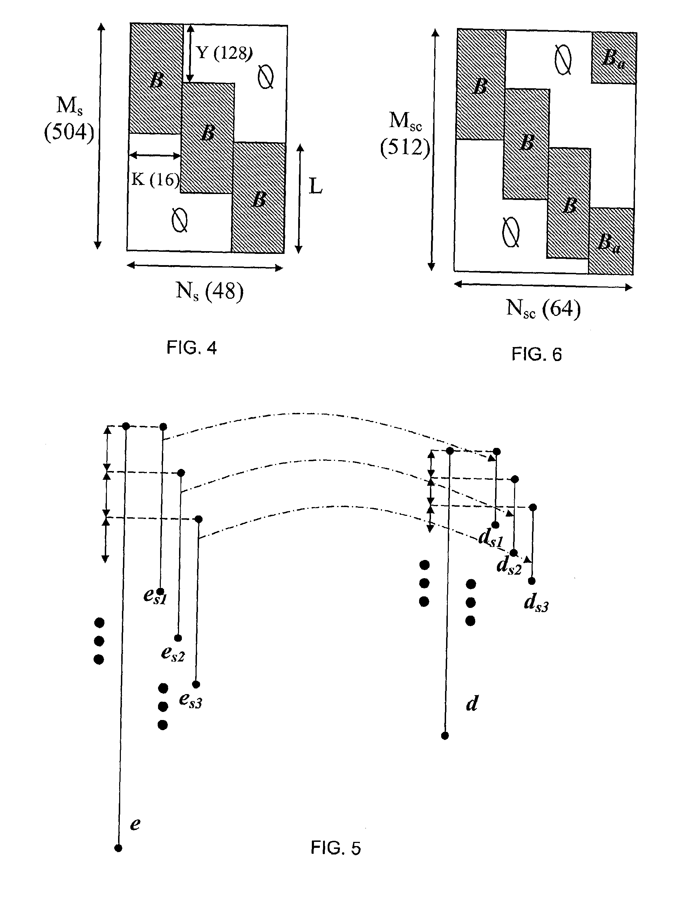

For instance, as shown in Fig. 4, each submatrix $A_s$ may include three consecutive blocks B, so that, in case of maximum resource usage inside the time slot of the TD-SCDMA system, its size will be $M_s$ = 504, $N_s$ = 48; parameters L, K, F remain unchanged. With such sizes, a group $\{e_s\}$ and a group $\{d_s\}$ of 40 subvectors, 20 for each half burst, can be used in order to have a correct detection. Said groups of 40 subvectors can in turn be considered as matrices.

The relation between subvectors $e_s$ and $d_s$ is shown in Fig. 5. The bi-directional arrows on the left of complete vectors e and d indicate vector portions corresponding to a symbol. Every solution $d_{sj}$ ($1 \le j \le 20$) of the small equation system gives a part of the complete solution, obtained by considering the 16 central elements of small solution vectors $d_{sj}$. Only for the first and the twentieth subvectors, which are the initial and final parts, respectively, of solution $d$ of equation (2), the first and the last 32 elements are to be considered. When applying the MMSE technique, each subvector $d_s$ is given by an equation similar to equation (4), where $A$, $d$ and $e$ are replaced by $A_s$, $d_s$ and $e_s$.

The bigger the size of $A_s$, the better the approximation of the solution. Anyway it has been evaluated that the above size guarantees a sufficient precision in the result.

In order to apply the FFT technique, each matrix $A_s$ is converted into a block-circulant submatrix $A_{sc}$, shown in Fig. 6, by the addition of a block column that contains $B_a$ having the same size as blocks B. The elements of $B_a$ are located in the initial and final rows of submatrix $A_{sc}$ in such a manner that the latter has a size 4L*4K, thus 512x64 in the considered example.

By such a transformation, equations (5) become:

$$A_{sc} \cdot d_{sc} = e_{sc} \tag{6}$$

where subvectors $e_{sc}$ are obtained from subvectors $e_s$ by adding 8 final zeroes.

The problems expressed by those equations are conventionally solved by the ZFLE method.

When the minimum square error problem is solved with the MMSE-LE method, the variance term $\sigma^2$ of relation (4) is to be taken into account. To do this, a new matrix

$$A_{sc}^e = \begin{bmatrix} A_{sc} \\ \sigma \cdot I \end{bmatrix}$$

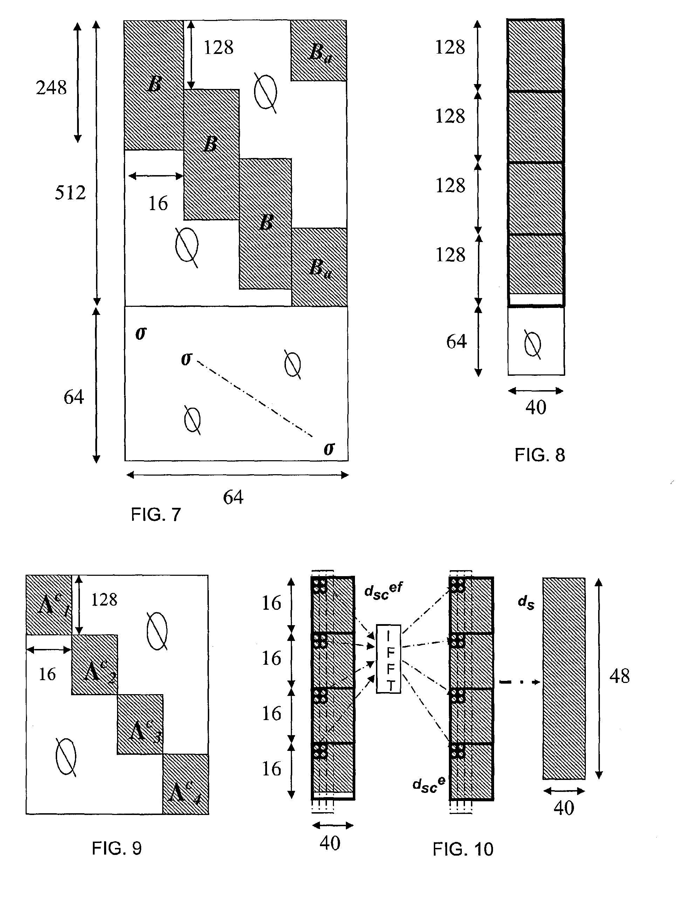

is built, where $I$ is a square identity matrix, having as many columns as the original matrix $A_{sc}$ (hence a 64x64 matrix in the example considered) and σ is a real scalar value linked to the variance. Matrix $\sigma \cdot I$ is row-added to $A_{sc}$. Matrix $A_{sc}^e$ is shown in Fig. 7: the upper part is $A_{sc}$, and the lower part is a diagonal matrix with identical elements σ.

Problems (5) to be solved become now

$$A_{sc}^e \cdot d_{sc}^e = e_{sc}^e \tag{7}$$

where

$$e_{sc}^e = \begin{bmatrix} e_{sc} \\ 0 \end{bmatrix},$$

$0$ being a null matrix (in the exemplary embodiment with size 64x40) row-added to original matrix $\{e_{sc}\}$ of subvectors $e_{sc}$. Matrix $e_{sc}^e$ is shown in Fig. 8, where the limits of the original matrix $\{e_{sc}\}$ are shown by the thick lines. Also the original zero padding of subvectors $e_{sc}$ is clearly visible in the Figure.

The Zero Forcing Linear Equaliser Solution of equation (7) is:

$$d_{sc}^e = (A_{sc}^{e^H} \cdot A_{sc}^e)^{-1} \cdot A_{sc}^{e^H} \cdot e_{sc}^e \tag{8}$$

which, expanding $A_{sc}{}^e$ and $e_{sc}{}^e$, becomes

$$d_{sc}^e = (A_{sc}{}^H \cdot A_{sc} + \sigma^2 \cdot I)^{-1} \cdot A_{sc}{}^H \cdot e_{sc} \tag{9}$$

that clearly is the searched Minimum Mean Square Error Solution of the starting problem in equation (6).

The FFT/IFFT method cannot be directly applied to problem (7) because matrix $A_{sc}{}^e$ is not circulant. It is necessary to find an orthonormal transformation $Q$ to be applied to matrix $A_{sc}{}^e$ and to subvectors $\{e_{sc}{}^e\}$ to obtain a new matrix $A_{sc}{}^{cm}$ and a new subvector group $\{e_{sc}{}^{cm}\}$ in the form:

$$A_{sc}^{cm} = \begin{bmatrix} A_{sc}{}^c \\ 0 \end{bmatrix}; \qquad e_{sc}^{cm} = \begin{bmatrix} e_{sc}^c \\ e_{sc}^s \end{bmatrix} \tag{10}$$

In $A_{sc}{}^{cm}$, the upper part $A_{sc}{}^c$ is a circulant matrix having the same structure as matrix $A_{sc}$ shown in Fig. 6 and a content that results from the application of the orthonormal transformation, and the lower part only contains null elements. Similarly, $e_{sc}{}^c$ is a vector group (or matrix) having the same structure as $e_{sc}$ and $e_{sc}{}^s$ is the result of the application of the transformation to the lower part (the null elements) of $e_{sc}{}^e$.

An example of suitable transformation will be disclosed below.

When applying transformation (10), the minimum square problem to be solved becomes:

$$A_{sc}{}^{cm} \cdot d_{sc}{}^{cm} = e_{sc}{}^{cm} \tag{11}$$

the Zero Forcing Linear Equaliser solution of which clearly is:

$$d_{sc}{}^{cm} = (A_{sc}{}^{cm^H} \cdot A_{sc}{}^{cm})^{-1} \cdot A_{sc}{}^{cm^H} \cdot e_{sc}{}^{cm} \tag{12}$$

Given the relation between $A_{sc}{}^{cm}$ and $A_{sc}{}^e$ (via the orthonormal matrix $Q$), it easily follows that equation (12) is equivalent to the target Minimum Mean Square Error solution defined in equation (8) and, taking into account the structure of the quantities $A_{sc}{}^{cm}$ and $e_{sc}{}^{cm}$, equation (12) can be written:

$$d_{sc}{}^{cm} = (A_{sc}{}^{c^H} \cdot A_{sc}{}^c)^{-1} \cdot A_{sc}{}^{c^H} \cdot e_{sc}{}^c = d_{sc}{}^e \tag{13}$$

which is the Zero Forcing Linear Equaliser solution of the minimum square error problem:

$$A_{sc}{}^c \cdot d_{sc}{}^e = e_{sc}{}^c \tag{14}$$

The Zero Forcing Linear Equaliser solution of the problem in equation (14) above can now be obtained with FFT/IFFT sliding window method because matrix $A_{sc}{}^c$, as said, is block-circulant with the same block structure (but different data) of matrix $A_{sc}$ shown in Fig. 6.

From the consideration above, it follows that the solution of equation (14) obtained using the FFT/IFFT sliding window method is equivalent to the minimum square error solution in equation (9), which is a good approximation of the Minimum Mean Square Error solution of the problem in equation (1).

It will be appreciated that all operations according to the invention are effected on channel response matrix $A$ and on submatrices thereof, and that there is no need to compute the channel correlation response matrix and the output of matched filter.

For sake of completeness of description of the method, the application of the FFT to problem (14) will be summarised with reference to Figs. 9 and 10. Use of a four-point block FFT is considered by way of example.

When applying the FFT, equations (14) become, in the frequency domain:

$$\wedge_{sc}{}^{c} \cdot d_{sc}{}^{ef} = e_{sc}{}^{cf} \tag{15}$$

In the considered example, matrix $\wedge_{sc}{}^{c}$ is a diagonal matrix comprising four 128x16 blocks $\wedge_{p}{}^{c}.(1 \leq p \leq 4)$, as shown in Fig. 9. The solution of problem (15) entails the solution of four smaller minimum square error problems:

$$\wedge_{p}{}^{c} \cdot d_{scp}{}^{ef} = e_{scp}{}^{cf} \tag{16}$$

where $d_{scp}{}^{ef}$ and $e_{scp}{}^{cf}$ are subvectors belonging to groups $\{d_{sc}{}^{ef}\}$ and $\{e_{sc}{}^{cf}\}$ corresponding to groups $\{d_{sc}\}$ and $\{e_{sc}\}$ considered in problem (6).

The four minimum square error problems are well independent and they can be solved in parallel with either of the Zero Forcing Linear Equaliser methods.

Application of the Inverse FFT (IFFT) to subvectors $d_{sc}{}^{ef}$ gives subvectors $d_{sc}{}^{e}$ in the time domain, from which subvectors $d_s$ will be recovered. When passing from subvectors $d_{sc}{}^{e}$ to subvectors $d_s$ the last 16 elements are to be discarded, as it can be immediately appreciated by considering the sizes of the involved elements. Vector $d$ is then built by taking the central part (16 elements) of each subvector $d_s$. Like in Fig. 8, the whole group of 40 subvectors is considered in Fig. 10. The traces of some of the individual subvectors are shown in phantom lines within blocks $d_{sc}{}^{ef}$ and $d_{sc}{}^{e}$.

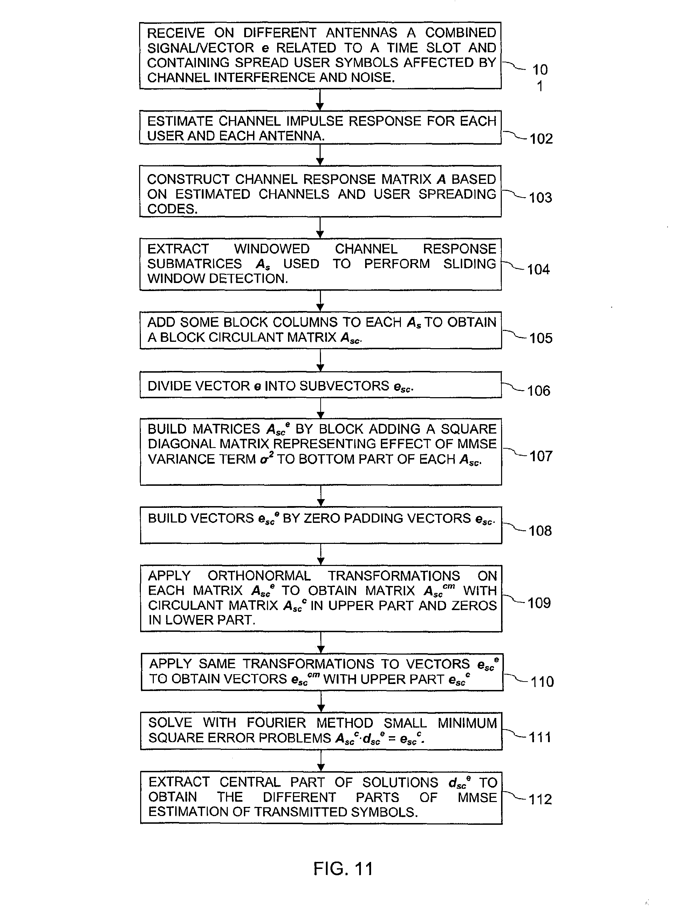

The whole joint detection process is now summarised with reference to Fig. 11.

At step 101, receiver 4, 5 (Fig. 1) receives at each time slot and at each antenna the spread user symbols affected by interference and noise, the received signal forming vector $e$. At steps 102, 103, the channel impulse response is estimated for each user 1 and each antenna and impulse response matrix $A$ is created based on the estimated channels and the spreading codes $c_i$. Matrix $A$ is then decomposed into small submatrices $A_s$ which are converted into circulant submatrices $A_{sc}$ by the addition of a block $B_a$ (steps 104, 105). In subsequent step 106, vector $e$ is divided into subvectors $e_{sc}$.

At this point, at step 107 a square diagonal matrix with the same scalar real value σ on the diagonal is block-row added to the bottom part of the circulant channel matrix $A_{sc}$ in order to obtain a matrix $A_{sc}{}^{e}$ including the effect of MMSE variance $\sigma^2$. Matrix $A_{sc}{}^{e}$ is characterised by basic block $B$ of $A_{sc}$. At step 108, vectors $e_{sc}$ are zero padded to build vectors $e_{sc}{}^{e}$ with the same number of rows as $A_{sc}{}^{e}$.

At step 109 and 110 the orthonormal transformations of relations (10) are performed on matrix $A_{sc}$ and on vectors $e_{sc}$, thereby obtaining circulant matrix $A_{sc}{}^{c}$ and vectors $e_{sc}{}^{c}$ that have taken into account the effect of MMSE variance $\sigma^2$.

Under such conditions, the small minimum square error problems (14) can be solved with the Fourier method (ZFLE technique) to obtain solutions $d_{sc}{}^{e}$ (step 111), and the central parts of solutions $d_{sc}{}^{e}$ are extracted to obtain the different parts of the minimum mean square error estimation of the transmitted symbols (step 112).

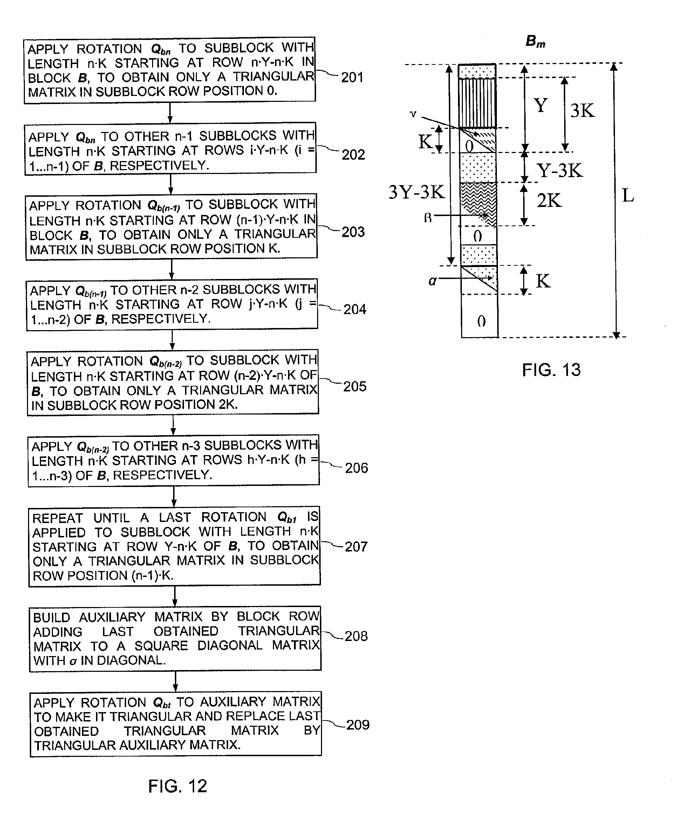

An example of orthonormal transformation(s) to be applied in steps 109, 110 in order to attain the desired result will now be disclosed with reference to the flow chart in Fig. 12 and to the graphical representations in Figs. 13 to 16.

The transformation is based on $QR$ decompositions applied to given subblocks in blocks $B$ and the flow chart assumes that the transformation is individually applied to the blocks. This is not a particular limitation, since by a proper choice of the transformation its effects can be confined within the individual blocks, as it is well known to the skilled in the art. The orthonormal square factors $Q$ of such decompositions are chosen so that application of rotations corresponding to the Hermitians of said factors to specific subblocks results in upper-triangular subblocks. The position of the subblocks being processed is chosen so as to ensure that the final matrix has the block-circulant structure. As a result of the transformation, each block $B$ is converted into a block $B_m$ organised as shown in Fig. 13.

In general, in order the transformation exists, the condition $Y \geq v \cdot K$ must be met, where $v$ is the upper integer of ratio L/Y (i.e. the ratio of the vertical size of the block to the vertical shift among adjacent blocks) and represents the horizontal overlap factor among blocks in the matrix. This condition is not particularly limiting, since it is met in TD-SCDMA systems as well as in many CDMA systems, especially when they work with more than one TX/RX antenna (Z > 1), as generally provided for by the operators in their base stations. The flow chart refers to the general case of a matrix with a generic overlap factor $v = n$, whereas Fig. 13, for sake of simplicity, considers a specific overlap factor $v = 3$.

The first step 201 is the application of a rotation $Q_{bn}$ to a subblock starting at row $n \cdot Y - n \cdot K$ and having length $n \cdot K$, to obtain only an upper triangular matrix beginning at the first row (row position 0) in the subblock. That triangular matrix is shown at α in Fig. 13. Then, at step 202, the same rotation is applied to other n-1 subblocks (2 in the example of Fig. 13), starting at respective rows $i \cdot Y - n \cdot K$ (i = 1...n-1) in $B$. Also those subblocks, as well as those concerned by the other transformations disclosed below, have lengths $n \cdot K$. Those other subblocks will not be made triangular, since

$Q_{bn}$ has been chosen so as to make a given subblock (matrix) triangular and therefore generally it cannot make triangular a different matrix, as the skilled in the art knows.

Similarly, at steps 203, 204 a new rotation $Q_{b(n-1)}$ is applied to the subblock starting at row (n-1)·Y-n·K, to obtain only a triangular matrix in subblock row position K, shown at β in Fig. 13, and then the same rotation is applied to other n-2 subblocks starting at row i·Y-n·K (i = 1...n-2) in **B,** respectively. Again, such n-2 subblocks are not made triangular. In the example of Fig. 13, of course a single subblock is concerned by step 203.

The operations are then repeated with a new rotation $Q_{b(n-2)}$ for subblocks starting at row (n-2)Y-n·K and i·Y-n·K (i = 1...n-3) (steps 205, 206) and so on, until a last rotation $Q_{b1}$ is applied to subblock starting at row Y-n·K of **B,** to obtain only a triangular matrix in subblock row position (n-1)·K (step 207).

For the example with $v$ = 3 shown in Fig. 13, the process ends of course at step 205, resulting in triangular matrix γ.

After the transformations above, an auxiliary matrix obtained by block row adding the last obtained triangular matrix to a square diagonal matrix with size K*K with "sigma" values on the diagonal (step 208). Said auxiliary matrix is made triangular by a suitable orthonormal rotation $Q_{bt}$, and the triangular matrix in subblock row position (n-1)·K in the subblock starting at row (Y-n·K) is replaced with the triangular part obtained by rotation $Q_{bt}$. Rotation $Q_{bt}$ has the effect of setting to zero the terms σ contained in the concerned block column, as required to build $A_{sc}^{cm}$.

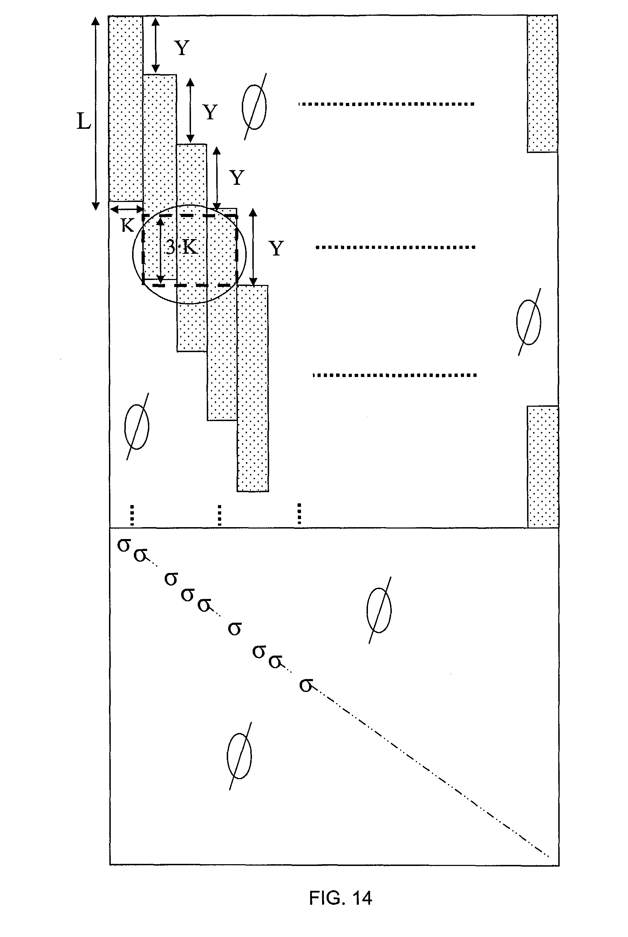

The application of the above process is represented in Figs. 14 to 16 for a whole matrix, always for the case $v$ = 3.

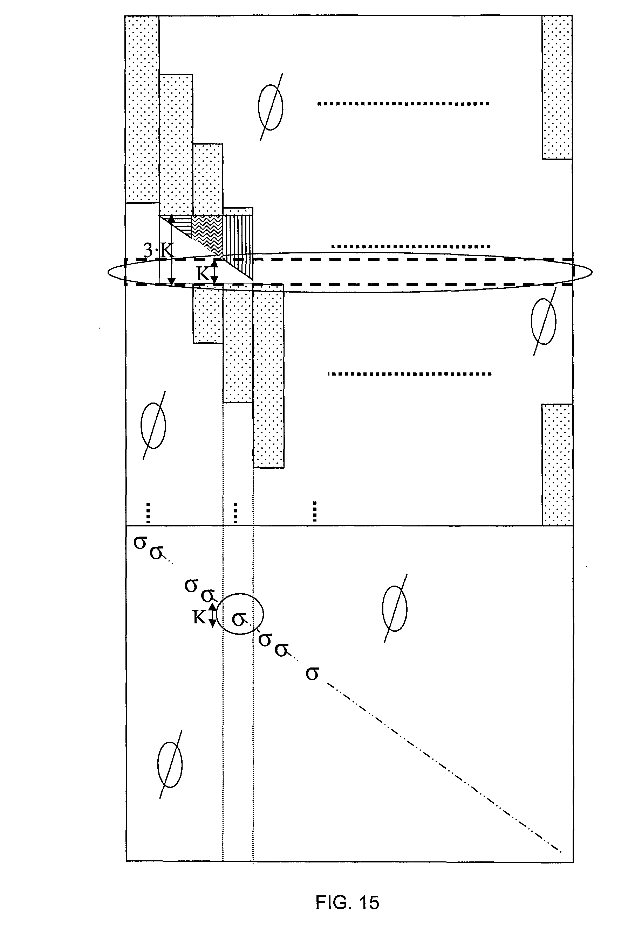

Here a first orthonormal rotation matrix $Q_1$ affects 3K rows in three adjacent block columns, for instance the 2nd to 4th block columns, as shown by a circle in Fig. 14. This transformation transforms the square matrix portion with size 3K*3K into an upper triangular matrix, as shown in Fig. 15. The same hatching as in Fig. 13 has been used for the subblocks in the different block columns. Taking into account the vertical shifting of adjacent blocks and reminding that a rotation applied to a certain group of rows in a block affects also the corresponding rows in the overlapping blocks, it can be immediately appreciated that the sequence of transformations applied to different subblocks in a single block according to the flow chart reproduce, on the concerned block, the effects of the single transformation applied to the three overlapping blocks.

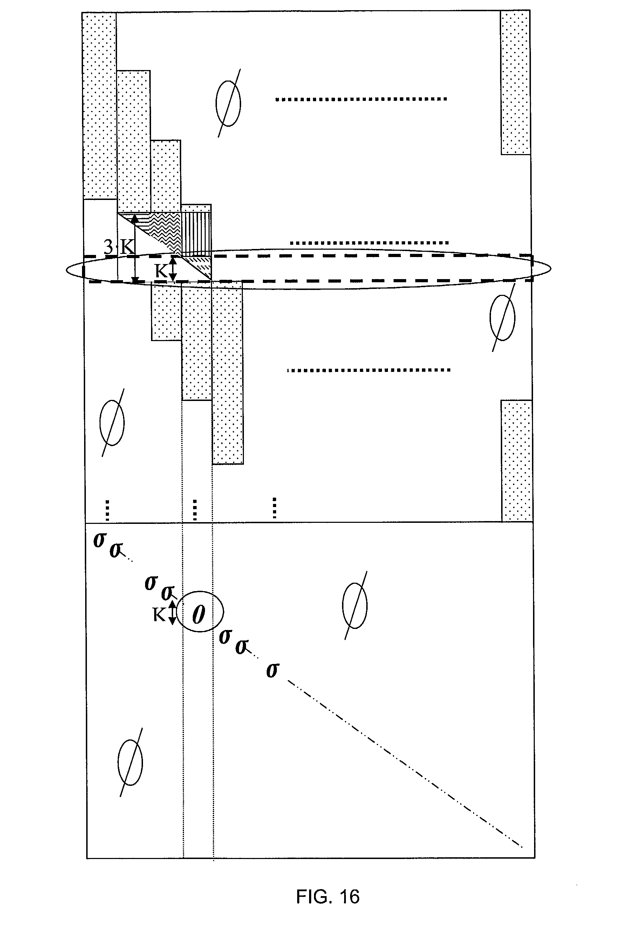

Then a second rotation matrix $Q_2$ is applied to matrix shown in Fig. 15: this rotation has only to affect the circled parts in the Figure, i. e. the lowest K rows of the triangular part in the fourth block column and K rows in the lower portion of the same block column, containing the "sigmas". This transformation allows to put to zero the "sigmas" in the fourth block column of matrix, as shown in Fig. 16.

Similar transformations are applied to all block columns in matrix. These transformations are chosen in order to obtain the same structure for each block $B_m$ of the final transformed matrix $A_{sc}^{cm}$, from which the wanted circular matrix $A_{sc}^{c}$ can be extracted (upper block part of $A_{sc}^{cm}$).

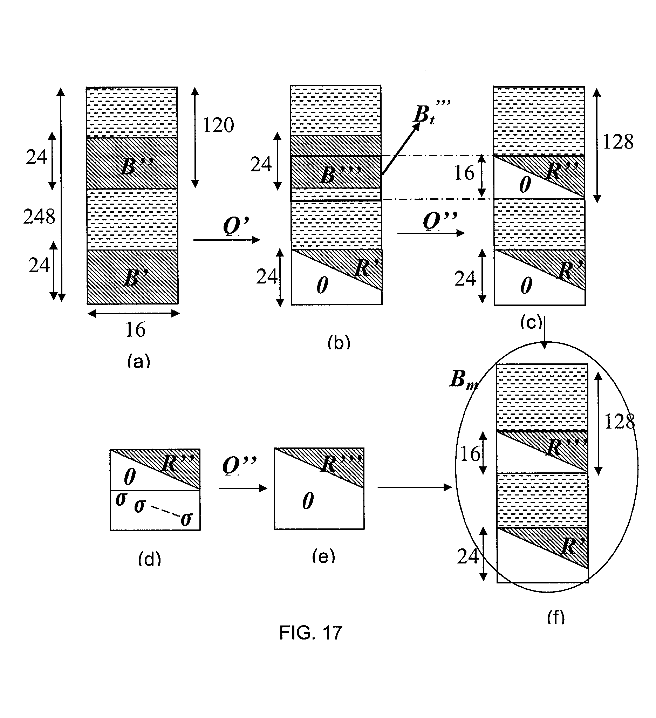

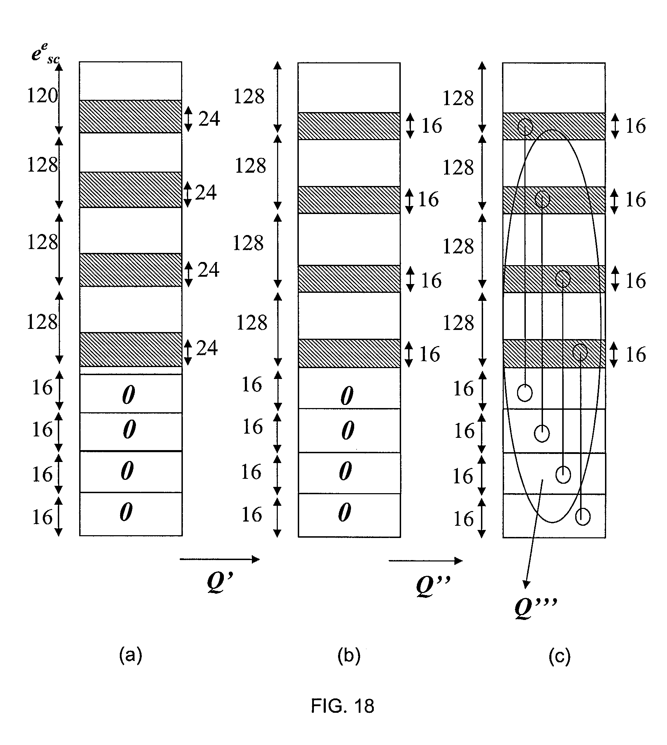

By way of more specific example, Figs. 17 and 18 show the application of the above process to the TD-SCDMA system mentioned above, i.e. to matrix $A_{sc}^{e}$ with overlap factor 2 shown in Fig. 7 and to subvectors $e_{sc}^{e}$ shown in Fig. 8. The transformations for the specific TD-SCDMA case follow directly from what described above.

A first $QR$ decomposition is applied to subblocks $B', B''$ of size (24x16) in Fig. 17(a), with such a square factor $Q'$ to give triangular matrix $R'$ and subblock $B''',$ see Fig. 17(b).

A second $QR$ decomposition is then applied to subblock $B_t'''$ and has a square factor $Q''$ such as to give a triangular matrix $R'',$ as shown in Fig. 17(c). Subblock $B_t'''$ is a 16x16 subblock downwards shifted by 8 lines relative to $B''''$. Thanks to the downward shifting, the decomposition does not affect the triangular matrix R' of the adjacent block.

The triangular matrix $R''$ is replaced with another triangular matrix $R'''$ (Fig. 17(e)) that is obtained via decomposition, with a suitable square factor $Q''',$ of an auxiliary 32x16 matrix in turn obtained by the block row combination of matrix $R''$ and a 16x16 diagonal matrix with the σ on the diagonal (Fig. 17(d)). Through those three steps block $B$ becomes block $B_m$ (Fig. 17(f)).

It is to be noted that the inconsistencies of the subblock sizes and positions with respect to the general rule expressed in the flow chart are only apparent. Indeed, as far as $Q'$ is concerned, the block can be considered downwards extended by 8 further rows of zeros, and $Q'$ can be seen as a transformation intended to make triangular the upper part of the subblock extended to 32 rows: as the skilled in the art knows, the 8 bottom rows of zeros are not affected by such transformation, so that the latter has the same effect as a transformation applied to 24 rows only. As to $Q''$ is concerned, it can be seen as a transformation applied to the combination of subblocks $B'''$ and $Bt'''$ (hence to a subblock of 32 rows starting at line 128 - 2x16 = 96) and such as to make triangular the bottom 16 rows.

The same rotations $Q'$, $Q''$ and $Q'''$ have to be applied to some subvectors of $e_{sc}^{e}$ to obtain the subvectors $e_{sc}^{cm}$ (and $e_{sc}^{c}$), as shown in Figs 18(a) to 18(c). The rows concerned by the rotations correspond to those of two adjacent blocks in the matrix. The concerned vectors are indicated in Fig. 18(c).

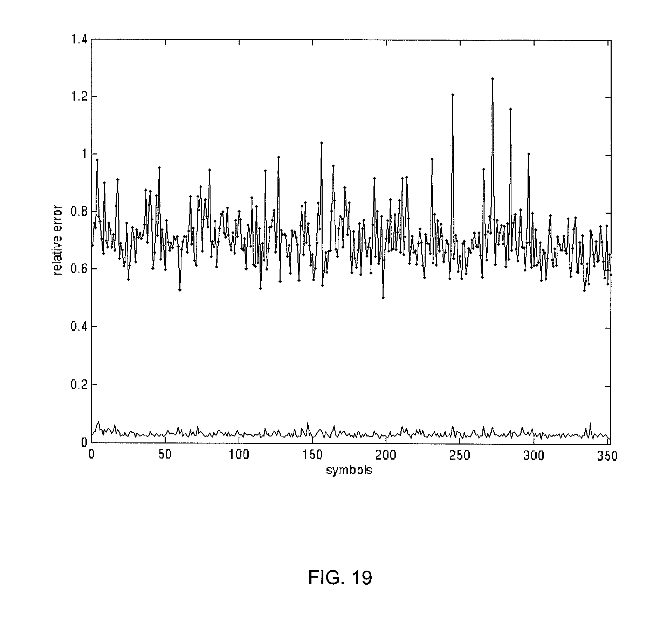

Fig. 19 shows, for the TD-SCDMA standard, the average relative error for symbols in half a burst estimated with the standard FFT sliding window method (Zero Forcing Equaliser, upper curve) and with a Minimum Mean Square Error Equaliser using the invention method (lower curve) based on FFT sliding window. The relative error is calculated in comparison with the Minimum Mean Square Error theoretical solution of problem (4). For sake of clarity, the graphs are obtained with simulations in which $\sigma^2$ value is one hundred times the variance of the elements of the channel matrix. The advantage given by the invention is evident from the graph: no degradation is introduced and high gain is obtained by the low computational and implementation cost of the invention compared to the cost given by the Minimum Mean Square Error theoretical solution of the problem.

It is clear that the above description has been given by way of non-limiting example and that variants and modifications are possible without departing from the scope of the invention. In particular, even if the invention has been disclosed in detail with reference to a TD-SCDMA system with 16 codes and 8 antennas and to submatrices $A_s$ made of three blocks with an overlap factor 2, it can be applied to any other TD-SCDMA system configuration and to other TD-CDMA systems, as it has been demonstrated. The only changes necessary concern the sizes of the matrices/submatrices and vectors/subvectors. Of course, the rotations will also have to be adapted to the specific situation. Moreover, since the sliding window FFT method is applicable also to FD-CDMA systems, the skilled in the art has no problem in adapting the invention also to such systems.

Furthermore, the invention can be applied to the channel response matrix **A** without application of the sliding window method, by making the channel response matrix circulant through the addition of block columns and then block row adding the square diagonal matrix representative of the MMSE variance terms, in a manner like that disclosed in connection with Fig. 6: even if, of course, the computational burden is greater than when using the sliding window method, the invention is still advantageous with respect to the prior art in that it dispenses with passing through the channel correlation matrix and with computing the output of the matched filter.

**Claims**

1. A method of joint user detection in code division multiple access (CDMA) wireless communication systems, comprising the steps of:

   - receiving (101), at each time slot and on at least one antenna, a combined signal containing a predetermined number of symbols of co-channel users (1a...1K), spread by respective spreading codes ($c_a$...$c_K$), and forming a received signal vector **e**;
   - estimating (102) the channel impulse responses for each user and the at least one antenna;
   - building (103) a block-diagonal channel response matrix A based on the estimated impulse responses and the spreading codes, said matrix comprising as many blocks (B) as are the spreading codes ($c_a$...$c_K$);
   - detecting (104, 105, 106, 107) the transmitted symbol vector **d** from the channel response matrix **A** and the received signal vector **e** through a minimum mean square error linear equalisation (MMSE-LE) technique using Fourier transform,

   **characterised in that** said MMSE-LE technique using Fourier transform is implemented directly on the channel response matrix **A** or on each of a plurality of portions thereof, made block-circulant by the addition of at least one block column ($B_a$) and then row added to a square diagonal matrix representative of the effect of a MMSE variance, thereby forming a modified matrix $A_{sc}^e$ with an upper part including channel response terms and a lower part including minimum mean square error variance terms; and **in that** at least one orthonormal transformation is applied to:

   - the or each modified matrix, in order to obtain a transformed matrix $A_{sc}^{em}$ in which the MMSE variance terms are set to zero and all blocks in the upper part are transformed to assume all a same structure such that they form again a block-circulant matrix $A_{sc}^c$, and
   - the received signal vector **e** or each of a plurality of portions thereof, zero padded to make the vector length correspond with the modified matrix length.

2. A method as claimed in claim 1, **characterised in that** said portions of the channel response matrix **A** and said portions of the received signal vector **e** are submatrices and subvectors, respectively, resulting from a respective sliding window decomposition.

3. A method as claimed in claim 1 or 2, **characterised in that** said at least one orthonormal transformation includes at least one QR decomposition with such an orthonormal square factor Q that application of a rotation corresponding to the Hermitian of said factor to selected portions of the upper and lower parts of the concerned matrix results in the conversion of a concerned portion in the upper part into a triangular matrix ($\alpha$, $\beta$, $\gamma$) and in the setting to zero of a concerned portion in the lower part.

4. A method as claimed in any preceding claim, **characterised in that** said CDMA system is a system in which a vertical shift (Y) between adjacent blocks in the upper part of the channel response matrix **A** is not lower than the product between the number of the used spreading codes ($c_a$...$c_K$) and a horizontal overlap factor *v* among said blocks, given by the upper rounded integer part of the ratio between a vertical size (L) of a block and said vertical shift (Y).

5. A method as claimed in claim 4, **characterised in that** said CDMA system is a system in which the channel response matrix **A** has a horizontal overlap factor *v* = n, and **in that** application of said at least one orthonormal transformation includes the following steps:

   a) applying a first rotation to a square portion of the upper part of the modified matrix $\boldsymbol{A}_{sc}^{e}$ spanning over n adjacent block columns, in order to convert said square portion into an upper triangular matrix;
   b) applying a second rotation to a portion of the matrix obtained at step a), which portion includes the lowermost K rows of said upper triangular matrix and K rows in the lower part of the matrix and belonging to a same block column as said lowermost K rows, in order to set to zero said variance terms; and
   c) repeating steps a) and b) for all block columns of the concerned matrix.

6. A method as claimed in claim 5, **characterised in that** the application of said first and second rotations is performed by applying a respective first and second sequence of orthonormal rotations to the individual matrix blocks.

7. A method as claimed in claim 6, **characterised in that** application of said first sequence of rotations includes the following steps:

   a1) applying a third rotation to a first subblock with length n·K starting at row n·Y-n·K in the block, to obtain only a triangular matrix in subblock row position 0;
   a2) applying said third rotation to n-1 second subblocks with length n·K starting at rows i·Y-n·K (i = 1...n-1) in the block, respectively;
   a3) applying a fourth rotation to a third subblock with length n·K starting at row (n-1)·Y-n·K in the block, to obtain only a triangular matrix in subblock row position K;
   a4) applying said fourth rotation to n-2 fourth subblocks, if available, with length n·K starting at row j·Y-n·K (j = 1...n-2), respectively;
   a5) repeating steps a3) and a4) until a last rotation is applied to a subblock with length n·K starting at row Y-n·K in the block, to obtain only a triangular matrix in subblock row position (n-1)·K, each repetition of steps a3), a4) concerning subblocks is shifted upwards by Y rows with respect to the previous execution of the steps.

8. A method as claimed in claim 6 or 7, **characterised in that** application of said second sequence of rotations includes the following steps:

   b1) building an auxiliary matrix by row adding the triangular matrix obtained at the last execution of step a3) to a square diagonal matrix including the variance terms in the diagonal;
   b2) applying a further rotation to said auxiliary matrix to make it triangular; and
   b3) replacing the triangular matrix obtained at the last execution of step a3) by said auxiliary matrix made triangular.

9. A method as claimed in any preceding claim, **characterised in that** said CDMA system is a TD-SCDMA system.

10. A method as claimed in claim 9 when referred to claims 7 and 8, for a TD-SCDMA system is a system having spreading factor 16 and receiving the combined signal of transmitting co-channel users at 8 antennas, whereby the channel response matrix includes blocks with length L = 248 rows vertically shifted by Y = 128 rows, **characterised in that**:

   - said third rotation is applied to a first subblock including the lowermost 24 rows of the block, and to a second subblock having the same size as the first subblock; and
   - said fourth rotation is applied to a fourth subblock of 16 rows, including the lowermost 8 rows of the subblock as transformed by said third rotation and the subsequent 8 rows in the block.

11. A joint detector (5) in a base station of a wireless CDMA communication system, **characterised in that** it performs a detection based on a MMSE-LE technique implemented with a method according to any preceding claim.

**12.** A CDMA communication system including, at each base station, a joint detector (5) according to claim 11.

FIG. 1

| Data Field 1 | Midamble | Data Field 2 | Guard Time |

FIG. 2

FIG. 3

EP 1 578 024 A1

FIG. 4

FIG. 6

FIG. 5

FIG. 7

FIG. 8

FIG. 9

FIG. 10

RECEIVE ON DIFFERENT ANTENNAS A COMBINED SIGNAL/VECTOR $e$ RELATED TO A TIME SLOT AND CONTAINING SPREAD USER SYMBOLS AFFECTED BY CHANNEL INTERFERENCE AND NOISE. — 10 1

ESTIMATE CHANNEL IMPULSE RESPONSE FOR EACH USER AND EACH ANTENNA. — 102

CONSTRUCT CHANNEL RESPONSE MATRIX $A$ BASED ON ESTIMATED CHANNELS AND USER SPREADING CODES. — 103

EXTRACT WINDOWED CHANNEL RESPONSE SUBMATRICES $A_s$ USED TO PERFORM SLIDING WINDOW DETECTION. — 104

ADD SOME BLOCK COLUMNS TO EACH $A_s$ TO OBTAIN A BLOCK CIRCULANT MATRIX $A_{sc}$. — 105

DIVIDE VECTOR $e$ INTO SUBVECTORS $e_{sc}$. — 106

BUILD MATRICES $A_{sc}^e$ BY BLOCK ADDING A SQUARE DIAGONAL MATRIX REPRESENTING EFFECT OF MMSE VARIANCE TERM $\sigma^2$ TO BOTTOM PART OF EACH $A_{sc}$. — 107

BUILD VECTORS $e_{sc}^e$ BY ZERO PADDING VECTORS $e_{sc}$. — 108

APPLY ORTHONORMAL TRANSFORMATIONS ON EACH MATRIX $A_{sc}^e$ TO OBTAIN MATRIX $A_{sc}^{cm}$ WITH CIRCULANT MATRIX $A_{sc}^c$ IN UPPER PART AND ZEROS IN LOWER PART. — 109

APPLY SAME TRANSFORMATIONS TO VECTORS $e_{sc}^e$ TO OBTAIN VECTORS $e_{sc}^{cm}$ WITH UPPER PART $e_{sc}^c$ — 110

SOLVE WITH FOURIER METHOD SMALL MINIMUM SQUARE ERROR PROBLEMS $A_{sc}^c \cdot d_{sc}^e = e_{sc}^c$. — 111

EXTRACT CENTRAL PART OF SOLUTIONS $d_{sc}^e$ TO OBTAIN THE DIFFERENT PARTS OF MMSE ESTIMATION OF TRANSMITTED SYMBOLS. — 112

FIG. 11

APPLY ROTATION $Q_{bn}$ TO SUBBLOCK WITH LENGTH n·K STARTING AT ROW n·Y-n·K IN BLOCK $B$, TO OBTAIN ONLY A TRIANGULAR MATRIX IN SUBBLOCK ROW POSITION 0. ~201

APPLY $Q_{bn}$ TO OTHER n-1 SUBBLOCKS WITH LENGTH n·K STARTING AT ROWS i·Y-n·K (i = 1...n-1) OF $B$, RESPECTIVELY. ~202

APPLY ROTATION $Q_{b(n-1)}$ TO SUBBLOCK WITH LENGTH n·K STARTING AT ROW (n-1)·Y-n·K IN BLOCK $B$, TO OBTAIN ONLY A TRIANGULAR MATRIX IN SUBBLOCK ROW POSITION K. ~203

APPLY $Q_{b(n-1)}$ TO OTHER n-2 SUBBLOCKS WITH LENGTH n·K STARTING AT ROW j·Y-n·K (j = 1...n-2) OF $B$, RESPECTIVELY. ~204

APPLY ROTATION $Q_{b(n-2)}$ TO SUBBLOCK WITH LENGTH n·K STARTING AT ROW (n-2)·Y-n·K OF $B$, TO OBTAIN ONLY A TRIANGULAR MATRIX IN SUBBLOCK ROW POSITION 2K. ~205

APPLY $Q_{b(n-2)}$ TO OTHER n-3 SUBBLOCKS WITH LENGTH n·K STARTING AT ROWS h·Y-n·K (h = 1...n-3) OF $B$, RESPECTIVELY. ~206

REPEAT UNTIL A LAST ROTATION $Q_{b1}$ IS APPLIED TO SUBBLOCK WITH LENGTH n·K STARTING AT ROW Y-n·K OF $B$, TO OBTAIN ONLY A TRIANGULAR MATRIX IN SUBBLOCK ROW POSITION (n-1)·K. ~207

BUILD AUXILIARY MATRIX BY BLOCK ROW ADDING LAST OBTAINED TRIANGULAR MATRIX TO A SQUARE DIAGONAL MATRIX WITH σ IN DIAGONAL. ~208

APPLY ROTATION $Q_{bt}$ TO AUXILIARY MATRIX TO MAKE IT TRIANGULAR AND REPLACE LAST OBTAINED TRIANGULAR MATRIX BY TRIANGULAR AUXILIARY MATRIX. ~209

FIG. 12

$B_m$

ν

3Y-3K

ß

α

Y

3K

K

0

Y-3K

2K

0

K

0

L

FIG. 13

FIG. 14

FIG. 15

FIG. 16

FIG. 17

FIG. 18

FIG. 19

# EP 1 578 024 A1

**European Patent Office**

## EUROPEAN SEARCH REPORT

Application Number

EP 04 42 5175

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,A | US 2003/035392 A1 (DE PARTHAPRATIM ET AL) 20 February 2003 (2003-02-20) * abstract; figure 4 * * paragraphs [0004], [0005], [0007], [0022], [0024], [0037] - [0042], [0044] - [0063] * * claim 1 * | 1-12 | H04B1/707 |
| A | MARTOYO L ET AL: "Low complexity CDMA downlink receiver based on frequency domain equalization" VEHICULAR TECHNOLOGY CONFERENCE, 2003. VTC 2003-FALL. 2003 IEEE 58TH ORLANDO, FL, USA 6-9 OCT. 2003, PISCATAWAY, NJ, USA,IEEE, US, 6 October 2003 (2003-10-06), pages 987-991Vol2, XP010700738 ISBN: 0-7803-7954-3 * Sections II and III * | 1-12 | |
| D,A | MACHAUER R ET AL: "FFT-specd and windowed multiuser detector for UTRA-FDD high rate data mode" IEEE ISSSTA, vol. 3, 2 September 2002 (2002-09-02), pages 712-716, XP010615628 * Sections III and V * | 1-12 | TECHNICAL FIELDS SEARCHED (Int.Cl.7)  H04B |
| D,A | VOLLMER M ET AL: "COMPARATIVE STUDY OF JOINT-DETECTION TECHNIQUES FOR TD-CDMA BASED MOBILE RADIO SYSTEMS" IEEE JOURNAL ON SELECTED AREAS IN COMMUNICATIONS, IEEE INC. NEW YORK, US, vol. 19, no. 8, August 2001 (2001-08), pages 1461-1475, XP001115203 ISSN: 0733-8716 * Sections I, II, III and VI * | 1-12 | |

The present search report has been drawn up for all claims

| Place of search | Date of completion of the search | Examiner |
|---|---|---|
| Munich | 11 August 2004 | Galli, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

23

**ANNEX TO THE EUROPEAN SEARCH REPORT
ON EUROPEAN PATENT APPLICATION NO.**

EP 04 42 5175

This annex lists the patent family members relating to the patent documents cited in the above-mentioned European search report.
The members are as contained in the European Patent Office EDP file on
The European Patent Office is in no way liable for these particulars which are merely given for the purpose of information.

11-08-2004

| Patent document cited in search report | Publication date | Patent family member(s) | Publication date |
|---|---|---|---|
| US 2003035392 A1 | 20-02-2003 | CA 2437660 A1 | 15-08-2002 |
| | | EP 1358718 A2 | 05-11-2003 |
| | | NO 20033476 A | 18-09-2003 |
| | | WO 02063779 A2 | 15-08-2002 |
| | | US 2003043767 A1 | 06-03-2003 |
| | | US 2002159415 A1 | 31-10-2002 |

For more details about this annex : see Official Journal of the European Patent Office, No. 12/82

EPO FORM P0459